# EUROPEAN PATENT SPECIFICATION

(11) **EP 1 920 623 B1**
(45) Date of publication and mention of the grant of the patent: **04.01.2017**
(21) Application number: 06779227.5
(22) Date of filing: 25.08.2006
(51) Int. Cl.: H04W 36/00

(54) **PERSONALISABLE HETEROGENEOUS NETWORK HANDOVER SCHEME**
PERSONALISIERBARES HETEROGENES NETZWERK-HANDOVER-SCHEMA
SCHEMA DE TRANSFERT DE RESEAU HETEROGENE PERSONNALISABLE

(30) Priority: 31.08.2005 GB 0517711; 31.08.2005 GB 0517712; 31.08.2005 GB 0517715
(43) Date of publication of application: 14.05.2008
(73) Proprietor: BRITISH TELECOMMUNICATIONS public limited company, London EC1A 7AJ (GB)
(72) Inventor: HUGHES, David, Edward, Suffolk IP1 4NG (GB)
(74) Representative: Lidbetter, Timothy Guy Edwin
(86) International application number: PCT/GB2006/003197
(87) International publication number: WO 2007/026137

(56) References cited:
- EP-A2- 1 263 254
- US-A1- 2003 119 454
- US-A1- 2005 130 661

## Description

The present invention relates to a heterogeneous network handover personalisation scheme and to related aspects.

In particular, but not exclusively, the invention relates to a method and apparatus for personalising a heterogeneous network handover notification to alert a user to a heterogeneous network handover event and/or to configure the operational control of apparatus which is triggered by the heterogeneous network handover event. In particular, but not exclusively, the invention further relates to a heterogeneous network handover scheme which is dependent either on identity information associated with the communications device requesting handover, or on the identity of the local area network to or from which a handover operation is being performed. A heterogeneous network handover event occurs when a mobile communications device changes its mode of communication from a short range network communications protocol to a long range network communications protocol, or vice versa. For example, when a mobile communications device performs a handover from a wide area network (WAN), for example a cellular communications network, to a local area network (LAN) such as a Bluetooth™ radio network, or vice versa.

It is well known to personalise features such as ring-tones which alert a user when there is a call to be answered on a mobile telephone, so that different callers have different ring-tones. It is also well known to users of certain operating systems to associate sound files with certain events related to desktop computing applications, such as playing a sound or causing a window to pop up on the arrival of an electronic mail communication. It is also known in the field of mobile handsets to personalise the sounds associated with certain keys being activated.

Normally handover events are designed to be transparent to a user of a mobile device, i.e., the user is not aware that a handover has been requested. (This is particularly so if the handover occurs when the device is in use.) In addition, such handovers are generic to all users of the networks. However, handovers between different GSM cellular networks can occur when international roaming is enabled on a mobile cellular communications device such as a mobile telephone handset. The different networks share a common communications protocol, however, and the same technology is used in each network.

The handover is generally homogeneous in terms of the communications protocols used, although control of the network changes from one network operator to another. The network operator of the new network usually generates an announcement which is sent to all mobile devices which register a handover to that network, regardless of whether the mobile device is fully capable of making/receiving calls and/or otherwise operating in that network. When the subscriber (the user of the device) has a roaming service subscription set up, the same subscriber information (for example, such as is provided by a communications device identifier and/or by the subscriber identification module (SIM)) is capable of being associated with usage of the communications device within both networks. This is useful for usage billing purposes. When the network handover occurs, the announcement sent by the new network operator informs the user that they are now in a different network to their original network and also alerts the user to the fact that they may be now charged at a different tariff by their network provider. It is known for example from US2005/0130661 (Aerrabotu) to enable a network handover event to be personalised by a user of a mobile communications device by associating one or more actions, such as alerts, with the network handover event.

Whilst cellular mobile communications network services are used by communications devices which have different characteristics to the cordless devices which are associated with a fixed calling line identity (i.e., which are provided for use with a fixed line communications network), handsets and other communications devices which are capable of operating in dual-modes are known in the art. As the communication modes for short-range networks differ from those of long-range networks, dual-mode communications handsets must perform heterogeneous handovers when they change their mode of communication and pass from one type of network to the other type of network (e.g., from a short-range LAN to a long-range WAN or vice versa). A system of this type is disclosed in US2004/0264410 (Sagi).

Each subscriber to services having dual-mode communications according to the invention is associated with a short range LAN. A subscriber's LAN is generally subject to authentication conditions which must be met before a mobile communications device can gain access to the LAN. Permission to utilise a LAN can be granted through authentication and/or security measures based on on a device identity or user identity. These permissions can be set by the network operator and/or subscriber and/or any other user having the necessary administrative rights, operating suitable means to configure the permissions, for example, an appropriately configured computer application and/or mobile communications device.

In a dual-mode communications system, a user of a mobile communications device may experience a differing service (for example, a different tariff, QoS, or bandwidth) within the coverage area of a LAN from that provided in a WAN. Accordingly, it is advantageous if the user of the mobile communications device is alerted to the handover event. Whilst it is possible to configure mobile communications devices to generate handover alerts having a generic form for all mobile communications devices of a specific device, this limits opportunities to exploit the location and/or device and/or user identity information which is provided in a dual-mode communications system where each subscriber is associated with a unique LAN (i.e., where subscribers each have their own home LAN).

In particular, but not exclusively, the invention obviates and/or mitigates the limitations of a generic handover scheme by seeking to provide a heterogeneous handover scheme for a mobile communications device in a dual-mode communications system in which a handover event and/or handover request event is associated with an alert which is personalised through configuration by the subscriber or another user. The invention also seeks to provide a scheme in which, if the LAN of a subscriber, referred to herein as a home LAN, is appropriately configured, when a request for a heterogeneous handover is generated, an alert may be provided to other user's mobile communications devices, regardless of whether handover is successful. This allows a subscriber to personalise the alert into a form of greeting and/or advertisement according to their own preference(s), and can also function as a location alert by providing a user of a mobile communications device with an alert specific to a particular subscriber's LAN location. In addition, or alternatively, if a wireless router and/or base-station for a LAN is appropriately configured, it is possible for a handover event/request to also trigger the generation of control information to control the operation of apparatus.

### SUMMARY STATEMENTS OF INVENTION

The aspects of the invention are as set out in the accompanying, independent claims and the preferred embodiments of the invention are as set out in the accompanying dependent claims.

Other embodiments of the invention are summarised below:
In one embodiment of the invention, the handover alert/action is personalised by the subscriber selectively controlling the form of the announcement sent to their own device or
to a device of one or more other users of the communications system when the respective device requests a handover to or from the subscriber's LAN.

The term alert refers an alert which is displayed on a communications device capable of communicating using a plurality of communications modes, each mode associated with a network, said alert being provided in response to said device generating a request for handover between two heterogeneous networks. The alert may be provided to the user either when the request is generated or when the handover has been completed and the communications device operates using a differing communications mode to the mode used prior to generating the handover request.

One or more alerts and/or one or more actions may be triggered by the same handover event. A handover action may be transparent to the user of the communications device in one embodiment, although in other embodiments, an alert may be sent to the user of the device indicating that the handover action has been triggered. For example, if a user configures their home lighting system to switch on external lights as their communications device hands over from the wide area network to that user's local area network; this may be immediately visible to the user as the lights turn on. In another example, however, if a user has configured their home heating system to turn up the temperature, it may be beneficial if an alert is sent to the user to notify them of this event, as this may not be immediately apparent to the user.

One embodiment of the invention personalises an event associated with the mobile device issuing a request message for the network handover, such as may occur when the QoS in the current network is less than acceptable. For example, a user may select a particular image to be displayed on the screen when this type of event occurs.

Another embodiment of the invention personalises a notification message sent to mobile device identifying which network the device is in after a handover has occurred.

The term personalised alert can refer to either the personalisation of the request event and/or the personalisation of any notification provided once handover has been completed between two heterogeneous networks. Where specific reference is made to one form of alert, such equivalence exists only where those skilled in the art are able to provide an appropriate adaptation.

Thus in one embodiment, the user is able to configure the alerts so that when handover into a short-range network occurs, the user is able to personalise that alert. In one embodiment, the short-range network is the user's own short-range network associated with the network identity of the user and/or the user's mobile device. In one embodiment, the user is also able to configure their own short-range network to personalise the announcement sent to other devices if they enter that user's own short-range network. In one embodiment, the user is able to configure the announcements differently depending on whether a hand-over is for a device moving into the short-range network or leaving the short-range network.

In another embodiment, the short-range network is another subscriber's own short-range network. In one embodiment, the user is able to configure their own short-range network to personalise the announcement sent to selected other mobile device subscribers to enable said subscribers to use that user's own short-range network.

In one embodiment, the user is able to personalise an alert associated with a request for a handover event which is generated by a mobile device. In another embodiment, the user is also able to personalise an alert associated with a post-handover announcement that the user is now in a particular network.

In one embodiment, in a communications system comprising a plurality of local area networks (LAN) within a wide area network (WAN), wherein the mode of communication used in said LANs differs from the mode of communication within said WAN, and wherein one of said LANs is associated with a user identity also associated with a wide area network, the invention provides a method of configuring an alert to devices operated by the user when that user's device requests a handover to local area networks for which the user is not the subscriber. Depending on the identity of the user's associated with said other LANs, the alert can be configured easily by a user of a mobile device, who is able to simply associated a user's identity (e.g., in the form of their telephone number and/or icon) with a particular form of alert. Such an alert then enables the user's identity to represent their home network LAN, so that the user's device can determine from this information when the identity of the LAN to which handover is requested to/form.

In one embodiment, a user of a dual communications mode communications device is able to determine location information by means of heterogeneous handover alerts and/or actions, e.g., the user can distinguish where they are by the alerts provided to their mobile device. Such an application may have additional benefits as an orientation aid to users, without requiring the communications overhead used in triangulation schemes etc.

The form of alert configured by a visitor to a network in one embodiment is arranged to over-ride any personal preferences configured for the LAN by the subscriber of the LAN (the term "subscriber" is used herein to refer to a user identity which is capable of configuring alerts to visiting devices in a particular LAN, as opposed to a user who is visiting a LAN but has configured their own mobile device to generate a particular alert).

Thus the invention seeks to provide a scheme for personalising notifications and/or actions which are triggered by a request for or completion of a heterogeneous network handover, i.e., to enable users of dual-communication mode communications devices to initiate a heterogeneous handover event which triggers a personalised alert or other action. This is may be useful in a number of ways both to a user of the device receiving the alert and/or a user who has configured the handover scheme where such handovers are associated with handover events to and/or from localised networks, such as might be generated by a "home nub" or other wireless network node whose ranges is limited, for example, to less than 50m or so. Such a range will typically extend just beyond the boundaries of a residential dwelling or small-scale commercial premises, which enables the alerts to relate to specific localised areas such as a subscriber's home, or to a school etc.

Thus, whilst it is possible for such heterogeneous transfers to be performed transparently (particularly if the device is in active use), according to one embodiment of the invention, the user is alerted to the change of networks using alert means which the user can personalise. In another embodiment, the user is not alerted but instead the handover triggers an action, for example, the activation of one or more devices such as may be found in a lightening system, central heating system, home entertainment system and/or kitchen.

Any other aspects of the invention are as defined in the accompanying independent claims, and any other preferred features are as set out in the accompanying dependent claims. Those skilled in the art will appreciate that the aspects of the invention may be appropriately combined with each other and with any appropriate combination of the preferred features.

The preferred embodiments of the invention will now be described with reference to the accompanying drawings which are by way of example only, and in which:
Figure 1 A shows a communications system comprising a plurality of wireless LANs and a wireless WAN according to an embodiment of the invention;
Figure 2 shows in more detail the heterogeneous handover region between a LAN and a WAN according to the invention;
Figure 3 shows schematically the different types of handover possible in a communications system according to the invention;
Figures 4A to 4D show the types of alert associated with the different types of handover illustrated schematically in Figure 3;
Figure 5A shows steps in a method of personalising a network event notification according to an embodiment of the invention;
Figure 5B shows steps in a method of personalising a network event notification according to another embodiment of the invention;
Figure 6 shows an exemplary event listing menu according to an embodiment of the invention;
Figure 7 shows an exemplary handover event menu according to an embodiment of the invention; and
Figure 8 shows an example of a LAN having a plurality of visitor devices, to exemplify how a subscriber to a network can configure differing alerts to other devices when said other devices are in said subscriber's home network.

The best mode of the invention as currently contemplated by the inventor will now be described with reference to the accompanying drawings. For reasons of clarity, the drawings may omit features of the invention whose presence and function are apparent to those of ordinary skill in the art.

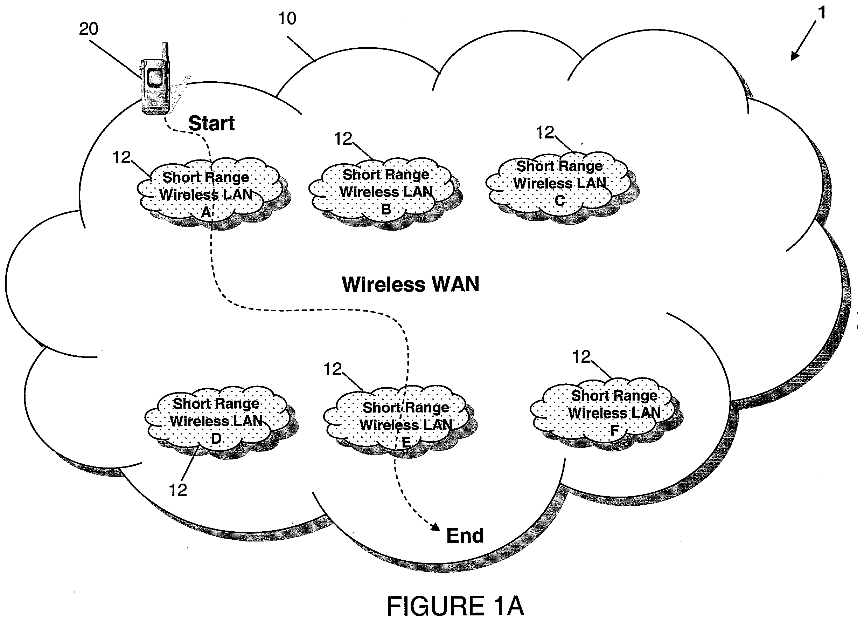

A heterogeneous communications system 1 is shown in Figure 1 of the accompanying drawings. Communications system 1 comprises a wireless wide area network (WAN) 10 and a plurality of short-range wireless local area networks (LANs) 12.

In Figure 1, WAN 10 has a greater geographic coverage than short-range LANs 12. The transmission characteristics and/or communications protocols of WAN 10 differ from those of each LAN 12. LANs 12 each have the same or similar transmission characteristics/protocols, although each LAN may be configured to require device authentication and so a mobile communications device according to the invention operate only in one LAN and the WAN, unless another LAN is configured to grant access to the mobile communications device.

A mobile communications device 20 (for example, a mobile telephony handset, personal digital assistant, media player, portable computer or other device having wireless communications capability) operates in differing communications modes depending on whether they are within WAN 10 or a LAN 12 for which they have access rights.

In the exemplary embodiment shown in Figure 1, the mobile communications device 20 is associated with the subscriber of short-range LAN #A and is able to handover between short-range LAN #A and WAN 10. In one embodiment of the invention, the communications device 20 is capable of performing a handover both on-hook and off-hook. In this embodiment, handover is possible during a communication, when setting up a communication, as well as when the device in a state capable of receiving instructions for a communication (i.e., when the phone is effectively off-hook so that a dial-tone is generated).

Typically, the communications mode of the mobile communications device 20 within WAN 10 is suitable for long-range communications, e.g. a cellular e.g. (Global System for Mobile) GSM network. The communications mode within the LAN is typically an unlicensed mobile access (UMA) mode of communication, for example, which is capable of providing access to the WAN 10. Alternatively, communications may be session based (for example, supported by the session initiation protocol (SIP)).

Cellular communications enabled devices (such as cellular telephone handsets and similar mobile communications devices) typically use Subscriber Information Module (SIM) cards to provide a unique user identity to associate communications usage of the device with the subscriber within a network. The SIM information enables a user of the mobile device to be identified by the network associated with the user identity. The term SIM, when used in the context of the invention, refers to any suitable form of user identity, including real and virtual and embedded means of user identification providing the necessary means of enabling a device according to the invention to be recognised in more than one type of network.

SIM cards are used in the Global System for Mobile (also known as Group Speciale Mobile) or GSM network, which provides a standard for digital cellular communications within Europe and other territories. The handset and associated SIM enables the cellular telephone to be recognised in a GSM network, even if the GSM network is not the network to which the SIM is subscribed. This is possible as GSM networks operate within standardised GSM 900 MHz and 1800 MHz bands and telephones can be configured to one or more of these GSM bands. A user who has subscribed to a particular GSM network can access various services using the GSM signalling system of that network and of other compatible GSM networks.

The LAN mode of operation of the mobile communications device is associated with a wireless router provided to a subscriber. The wireless router supports provides short-range communications within home LAN #A in the exemplary embodiment shown in Figure 1. Examples of short-range wireless communication protocols (i.e., providing coverage less than 100 meters) include Bluetooth™, DECT, IEEE 802.11 (Wi-Fi) and variants, and the Dedicated Short Range Communications (DSRC) protocol, and any other appropriate continuous air interface protocol.

The mobile communications device 20 according to the invention is provided with a dual operation capability for both short-range local area network communications protocols (e.g., Bluetooth™) as well as for long-range wide area network communications protocols (such as are provided in GSM cellular communications networks), and is further provided with means to implement a transparent handover between each mode of communication, so that operation of the device can continue despite the communications mode changing regardless of whether the device is on or off-hook. Where appropriate, the mobile communications device 20 is configured to transfer calls between networks supporting the same type of communications protocol (homogeneous handover) as well as between networks supporting differing types of communications protocols (heterogeneous handover), i.e., between networks in which communications have different transmission characteristics.

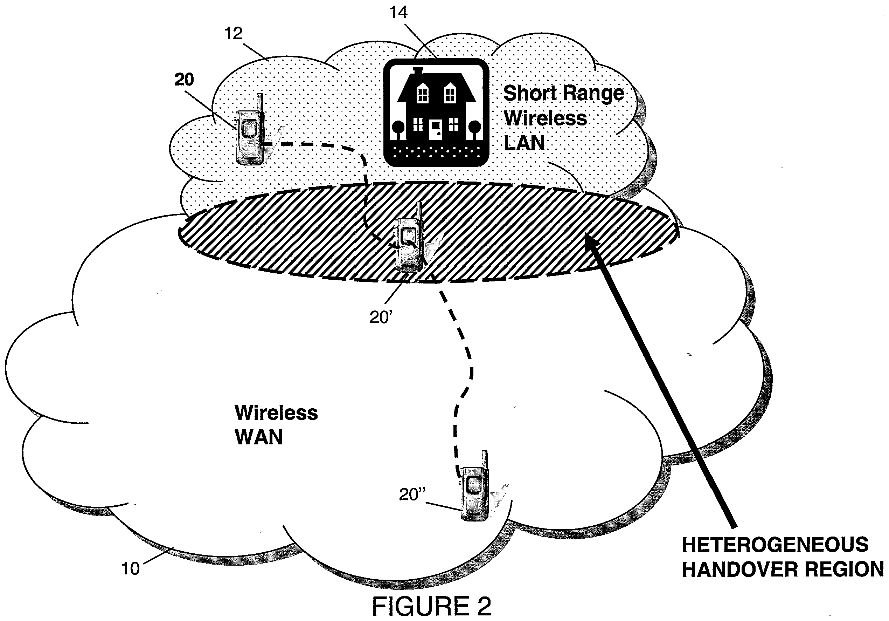

Referring again to Figure 1 of the accompanying drawings, WAN 10 covers a sufficiently large geographic region for its network coverage to encompass one or more LANS, and in Figure 1, each of the plurality of LANs 12 are contained within the coverage of WAN 10, so that within the coverage of each LAN 12, dual-mode mobile communications device 20 is capable of receiving communications signals from both WAN 10 and from that LAN 12. Thus mobile communications device 20 is associated with the subscriber for LAN#A and is accordingly provided with access to LAN #A in this exemplary embodiment. In addition, in the communications system shown in Figure 2, mobile communications device 20 will also operate in LAN #E, which is associated with another subscriber. This is by virtue of the other subscriber configuring their wireless router to grant access to LAN #E. Mobile communications device 20 is not able to operate in LANs B, C, D, or F in the embodiment shown in Figure 1, and remains operating in the WAN communications mode when within the network coverage area of LANs B, C, D, and F.

Although mobile communications device 20 is not able to operate in LANs B, C, D, or F, the communications device 20 may request handover when in the handover region of LANs B, C, D, or F. However, this request will not be successful as no access permission has been granted. According to one embodiment of the invention, subscribers for LANs B, C, D and F may configure their wireless routers to trigger an alert which is provided to mobile communications device 20 when the device requests handover. This alert may itself be personalised by each subscriber for each LAN, and is conveyed to the mobile communications device in the form of a self-executing data file and/or a text message (e.g. a short message service (SMS) text message) and/or other communication medium appropriate for the alert.

In one embodiment of a communications system according to the invention, the dual-mode mobile communications device 20 and/or the subscriber has at least one unique identity capable of association with a home LAN #A as well as with WAN 10. The dual subscriber identities are implemented in one embodiment on the mobile communications device 20. In an alternative embodiment, the subscriber identity is implemented by embedding a user identity associated with LAN #A within a user identity associated with WAN 10 (or vice versa). In other embodiments, other identity schemes may be provided such as are already known to those of ordinary skill in the art.

In the embodiment shown in Figure 1, home LAN #A of the invention is associated with the subscriber identity. A user of a communications device associated with the home LAN #A need not be the subscriber themselves however, providing they or their device has been authorised by the subscriber to use LAN #A.

Whenever the mobile communication device 20 determines appropriate conditions for requesting a handover between WAN 10 and LAN #A (or vice versa) exist, a handover request event message is generated by the communications device 20. This request is sent to the wireless router of LAN #A if the handover request is for handover to LAN #A or to a base station for WAN 10 if handover is in the other direction. The generation of a handover request triggers at least one action which is configurable according to an embodiment of the invention.

In one embodiment, the action causes an alert to be generated on the communications device of the subscriber for LAN #A, which alerts the user of that device (typically the subscriber) to the handover event and/or provides information that they are now within the area of coverage of LAN #A. In this exemplary embodiment, the alert is configured by the subscriber for LAN #A to be generated only when their own communications device 20 requests handover to or from LAN #A, i.e., any other users' communications devices are not made aware of the presence of the subscriber's LAN.

In this exemplary embodiment, the subscriber is able to configure mobile communications device 20 to associate either the generation of a heterogeneous handover request with an alert and/or to associate the successful completion of a heterogeneous handover request with an alert. The form of the alert is personalised by the subscriber associating a handover request event with one or more actions configurable by the subscriber which are performed by the mobile communications device 20. Exemplary actions performed by the mobile communications device 20 include: displaying an image or text and/or playing an audio and/or video file and/or causing the mobile communications device to generate a vibration alert, by associating the execution of the relevant files containing appropriate instructions with the relevant network handover event.

In another exemplary embodiment, the subscriber of LAN #A configures their communications device 20 to generate an alert when they are within the coverage area of another LAN (for example LAN #B, LAN #C, LAN #D, LAN #E, or LAN #F).

In another exemplary embodiment, the subscriber of LAN #A configures their mobile communications device to communicate with the wireless router for LAN #A control information to cause one or more actions to be performed by apparatus other than mobile communications device #A, for example, to control the operation of a lighting and/or heating system. In one exemplary embodiment, the control operation is implemented by the mobile communications device further communicating an activation signal to said wireless router, which processes said activation signal to generate control information for communication to said controllable apparatus, in another exemplary embodiment, the control operation is implemented when the wireless router of LAN #A receives a request to handover to or from LAN #A. The receipt of the heterogeneous handover operation causes a lookup process to be performed to retrieve information previously configured by the subscriber using an appropriate computer application. The wireless router and/or the platform supporting the configuration application are arranged to interface with the control interfaces of said apparatus in any suitable manner known to those of ordinary skill in the art. For example, apparatus may be operable by being provided with means to receive control signals generated by the wireless router.

In the exemplary embodiment shown in Figure 1, only six LANs 12 are shown for clarity. In real communications systems, the invention is fully scalable and may comprise, for example, several hundred thousand LANs 12 (and associated subscribers) within one or more WANs.

As mentioned above, each LAN has a relatively short range compared to a WAN. Thus the characteristics of each LAN 12 include an area of coverage which is associated with a fixed geographic point located within the area of coverage of the WAN 10. For example, one embodiment of a wireless LAN 12 comprises a short-range LAN such as might be implemented using a UMA mode of communications, e.g. a 802.11 standard (e.g., WiFi, or WiMax). The preferred embodiment of a LAN according to the invention is short-range radio network conforming to the Bluetooth™ standard, however, any communications protocol which is capable of enabling a mobile device operating in such a mode of communications to handover to/from WAN 10 when both on-and off- hook may be implemented by LAN 12.

Figure 1 shows an exemplary path as a dotted line of a mobile communications device 20 according to the invention. Within WAN 10, mobile communications device 20 moves along the path through LAN #A (for example, their own house) and on through LAN #E the mobile communications device 20 will generate requests for handing over to/from each LAN encountered along the path when in the handover region 16 shown in Figure 2 of the accompanying drawings.

Figure 2 shows mobile communications device 20 operating according to a first communications mode within a wireless LAN 12 generated by a wireless router 14 moving along a path into a handover region 16. In handover region 16, a mobile communications device 20' will request handover to the wireless WAN 10. Once handover has been successful, within the wireless WAN 10, the mobile communications device 20" operates using a different communications mode to that provided in LAN 12.

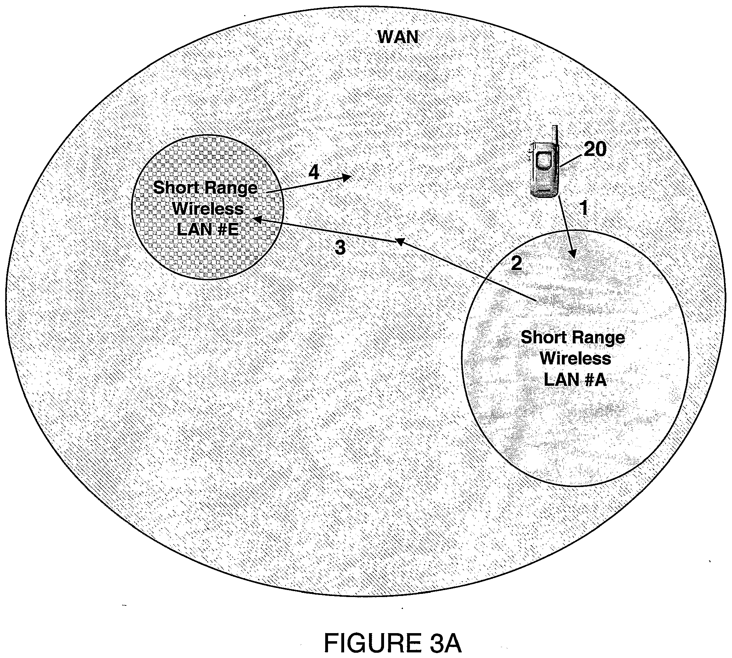

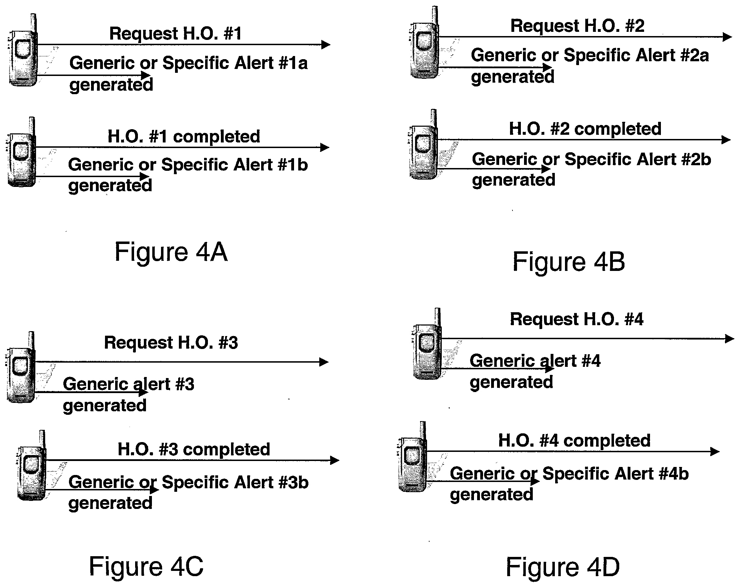

The path shown in Figure 2 requires the mobile communications device 20 to generate several requests for handover, firstly from LAN A to WAN 10, secondly from WAN 10 to LAN E, from LAN E to WAN 10, and finally from WAN 10 to LAN F. These differing handover requests are shown in Figure 3 and in Figures 4A to 4D.

Figure 3 shows a handover from WAN 10 to LAN #A as handover #1, from LAN #A to WAN 10 as handover #2, from WAN 10 to LAN #E as handover #3, and from LAN #E to WAN 10 as handover #4. Figures 4A to 4D show how the handover events shown in Figure 3 may trigger user personalised actions comprising either generic and/or specific alerts. Mobile communications device 20 is associated with the subscriber for LAN #A in this exemplary embodiment of the invention, accordingly, in Figures 4A and 4B, personalised alerts are provided for two types of handover event. The first type (upper figures) of handover event occurs when the mobile communications device generates a request for handover. The second type of handover event occurs when the handover has been successful and the mobile communications device 20 changes its mode of operation (bottom figures). The alerts may be personalised by the user in a generic form (for example, the same handover alert could be generated by the mobile communications device 20 for both handovers #1 and #2) or they may be specific (e.g., a different handover is provided for handover #1 from handover #2). The alerts are personalised by configuring the mobile communications device to associate one or both handover events with an appropriate action, for example, by playing a sound, displaying an image, vibrating, or where the communications system is appropriately configured, the mobile communications device and/or the wireless router receiving the handover request may cause other apparatus to operate in a manner predetermined by the subscriber.

When mobile communications device 20 enters and or leaves another subscriber's LAN, the other subscriber may have configured their wireless router to grant access to the LAN on a user specific basis or provide unrestricted access. If the mobile communications device requests handover (upper figures in Figures 4C and 4D) this may trigger a generic alert to be provided in one embodiment of the invention. If the mobile communications device is granted access to the LAN (lower figures in Figures 4C and 4D), handover will be successful, in which case the mobile communications device may also alert the user to the handover.

There are two ways of personalising the alert for the handovers shown in Figures 4C and 4D. One embodiment of the invention provides a form of personalisation by the user of the mobile communications device, who configures their mobile communications device to recognise the identity of LAN #E and associates with this LAN a particular alert. In another embodiment of the invention, the subscriber of LAN #E associates an identity for mobile communications device 20 and/or its user and configures the wireless router supporting LAN #E to generate an appropriate alert message or self-executing file which is communicated to the mobile communications device 20. When mobile communications device 20 receives this communication, it alerts the user of the device to their being within the coverage area of LAN #E. The subscriber for LAN #E may provide a generic "alert" to all visiting devices and/or specific "alerts" for certain visiting devices.

As mentioned above, each mobile communications device 20 in communications system 1 according to the invention has the capability of receiving and transmitting information in at least two modes of communication, one associated with LANs 12, the other with WAN 10. Means for handing over between heterogeneous networks (i.e., between LANs 12 and WAN 10 and vice versa) are also provided on each device. One embodiment of the invention provides a mobile communications device with a capability to "detect" and/or to "roam" in LANs other than the home LAN. An ability to use a mobile communications device in a plurality of LANs is in one embodiment provided as a default capability. In an alternative embodiment, a subscriber must have a "roaming option" type service subscription. Even in an embodiment where a mobile communications device 20 is capable of "roaming", usage of other LANs is controlled by the subscriber for each LAN. Where a "visiting" mobile communications device requests a handover but is not given permission to use the LAN, it remains in WAN communications mode. In this case, an alert may be triggered by the request for handover as handover cannot be completed.

As mentioned above with reference to Figure 2, various types of handover are possible. Each type may be associated with a different type of personalisation scheme. Moreover, personalising the heterogeneous network handover scheme can be made by a subscriber of a home LAN for communications devices handing over to or from that LAN or by a user of a communications device who is visiting a subscriber's LAN. The personalisable handover scheme of the invention is dependent on either the generation of requests for a heterogeneous network handover and/or dependent on the successful completion of a heterogeneous network handover.

Thus, in one embodiment of the invention, a user programs their own mobile communications device 20 to associate a request network handover event with a personalised alert, such as a particular image or video or audio file to be executed. As an example, handover to home LAN #A is associated with an image of a family. Alternatively, an audio alert may be played, and/or text displayed, indicating a greeting such as "Welcome Home", or a vibrate alert executed. In an alternative embodiment, the subscriber programs a home control system which is configured to interface with the home-hub computing system to control the operation of one or more apparatus, such as for example are found in, a lighting system, central heating system, home entertainment system (e.g., a television, audio/video signal recording apparatus etc), kitchen system (e.g., a home appliance such as a washing machine, dishwasher, oven, refrigerator etc). The control operations are selected by the user to be automatically triggered by a handover event (either a request or a successful handover). This is either in addition to and/or instead of the alert provided by the mobile communications device. In one embodiment, an additional alert confirming an action has been triggered by the handover is provided to the subscriber.

In another embodiment, a user associates a network handover request message associated with a particular network identity (for example, if the handover to the home network of another subscriber whose number details were stored in association with that home network's identity). This embodiment requires each LAN to be associated with an identifier which is capable of detection by the mobile communications device performing the handover operation. This enables the user to personalise the alert to the handover to that subscriber's home LAN. As an example, a child's mobile communications device can be configured to play a sound saying "You're at Granny's"), or to display an image of "Granny" on the mobile device display when they handover to the LAN of their Granny, and to display a different alert, e.g., "You're at Daddy's", when they handover to the LAN of their father.

In another embodiment, a user generates a generic personalised message to alert all other users of similar devices, to the fact that they have entered his or her home network, (i.e., to a network for which the user has a "subscriber status") e.g., to play a sound indicating "You're at Bob & Carol's", and to send automatically a picture say of the family pet to the screen of the visitor's mobile device, when the other user's device generates a request to handover to that home network of the user.

Referring again to Figure 2 of the accompanying drawings, a LAN 12 generated using a wireless router 14 provided in a subscriber's home or other premises is referred to as a "home network" or equivalently a "home LAN" for that subscriber. A home LAN is associated with a limited and localised geographic area of coverage (for example, up to a range of 50 meters, or 100 meters from the wireless router generating the wireless home local area network, depending on the communications protocol supporting LAN 12). For example, a "home network" or "home LAN" etc, can be associated with a subscriber's home (or alternatively with other premises, or location, e.g., with a business, retail outlet, hotel, hospital restaurant etc.). As mentioned previously, when outside a LAN 12 area of coverage, a WAN 10 provides communications services to mobile device 20.

On the lower side as shown in Figure 2, at a first position, mobile device 20 is wholly within the WAN 10. On the upper half of Figure 2, at a third position, mobile device 20 is shown wholly within the area covered by LAN 12. In an intermediate position, such as is indicated by the hashed boundary region 16 shown in Figure 2, mobile device 20 is in a state of handover between the two networks. As mentioned hereinabove, a heterogeneous network transfer event has two stages. Firstly, a request is issued by the mobile device to request handover. When this request is generated the mobile device is still communicating using a mode of communication associated with the pre-handover network. Secondly, after the handover has been completed, a notification is issued to indicate the user is in the second network. After handover, the mobile device uses a different mode of communication to the first, the different mode of communication being used within the second network.

In one embodiment of the invention, the user is able to personalise a first alert which is associated with the request issued by the device for handover to a different network. In an alternative embodiment of the invention, the user is able to personalise a second alert indication identifying when the mobile device is within the area of cover of the new network. This second alert may comprise an alert post-handover, or an indication that such a LAN exists (i.e., it may comprise an advertisement) which has been configured either by the user of the mobile device, or by the subscriber to the other LAN.

In one embodiment of the invention, the alerts are bi-directional (i.e., depend on whether the user is arriving into the LAN or leaving it). The alerts may be configured by the user of the mobile device using the mobile device, or configured remotely and the configuration settings transferred to the mobile device using appropriate means such as are well-known to those skilled in the art.

A number of alert modes are possible, including individual or combinations of alerts, for example, audio, visual, video, tangible (e.g., vibrational) etc. The alerts are activated by associating data with the relevant network event using an appropriate application. In one embodiment, the subscriber is able to further personalise events for other users in dependence on their identity (or the identity of their devices/home networks).

In a preferred embodiment of the invention, the mobile device is provided with a user identity (e.g. a SIM code) associated with a LAN mode of communications, e.g., with a short-range radio network such as Bluetooth™, which is capable of being associated directly or indirectly with a user identity for use in a WAN (e.g., within a GSM network). The term user identity as referred to herein refers to a single device/user operating a device, regardless of how the identity in practice is recognised within each network.

For example, referring back now to Figure 1, as the mobile device moves along the dotted line shown, the actual form of the user identity associated the LAN "A" remains the same in one embodiment, but in other embodiments it may take a different from in LAN "A" from the form (or equivalently format) known required in WAN 10. This is case, the two forms/formats of identity are associated using appropriate means known to those of ordinary skill in the art with the same user enabling a unique user identity to be provided within both LAN and WAN.

According to the invention, a handover event generates an alert either indicating when the communications mode of the mobile device has changed and/or when the mobile device has requested that the communications mode change. For example, along the path shown in Figure 1, the route taken is entirely within the network coverage of WAN 10. If the mobile device is capable of handing over between WAN 10 and LAN A, however, when the mobile device is within the area of cover provided by LAN A, the device will operate using a different mode of communications to that used when it is within WAN 10.

Consider a user A whose "home network" is LAN A in Figure 1. In one embodiment of the invention, whenever user A is outside the area of cover provided by network A, the WAN (for example, a GSM network) is the only network communications protocol which can used by their mobile communications device (for example, such as is the case if the "LAN roaming option" has not been subscribed to by the user). This means that when the mobile device is in the area covered by other short range network E, the user A of the mobile device will continue to use the WAN network communications protocol even when they are within range of network E.

None the less, LAN #E may be configured to announce itself to "visitors" (i.e., other users of the communications system, for example, who may be associated with other home LANs), when the devices of the "visitors" enters the area covered by LAN #E. In this case, a user is alerted when they enter the coverage area of LAN #E as a result of their communications device requesting to handover to LAN #E, regardless of whether such a request is successful or not. Such an alert does not provide an indication that the mode of communications of the user's device has changed, it simply indicates that it is in LAN # E's coverage area.

Such an alert is in one embodiment of the invention configured by the user of the mobile device either specifically to be associated with LAN E, or as a default for all other (non-home) LANs. Alternatively, in another embodiment of the invention, such an alert is configured by the user for whom E is the home network. Again, this alert may be specific to user A and their device or be generic to all visitors to the subscriber's LAN. Where a visiting mobile communications device is not able to utilise the LAN within whose coverage the mobile communications device is, an alert is in one embodiment of the invention conveyed from the wireless router for that LAN via the WAN 10 to the communications device. If the visiting device is able to handover to the visited LAN, then the alert may be provided using the communications protocol for that LAN.

By providing an alert to the user, which either the user could configure or the subscriber responsible for network E could configure, the user would know that network E exists. To give some examples of such a personalised alert, this could be very helpful to children (e.g. "Welcome to Granny's") in which case a subscriber (here "Granny") could configure a personalise announcement to be sent only to the mobile devices of her grandchildren. When other visitors call, however, a more generic announcement is provided to the visitor's mobile devices, e.g. "Welcome to Mrs. SoAndSo".

The ability to personalise and distinguish visiting devices means that generic announcements which might be useful for businesses, e.g. "X Restaurant" etc., might customise their announcements for repeat customers etc. Alternatively, a privacy mode could be adopted as a default to "visiting" devices.

In another embodiment, user A is able to use their mobile device in LAN E. For example, the user may either automatically have rights to use any LAN in the communications system or user A may have has subscribed to some form of roaming option.

In yet another an alternative embodiment of the invention, user E, who has a SIM associated with network E, has subscribed to a service which enables network E to allow other SIMs associated with other LANs to use network E if they are within the area covered by network E. This would mean for example, that if a user were to start a call at home network A, and continue the call as they crossed the road to their neighbours house (network E), the mobile telephony device used to make the call would handover twice, firstly heterogeneously between network A and GSM network 10, and secondly heterogeneously between GSM network 10 and network E. Thus, "Granny" may configure her home network to enable other devices (e.g. in the family) to use her home-network when within it. The availability of the "Granny" home network would be consistent with the announcement that the visiting mobile device is within the network coverage of the device. The alert may be persistent in some embodiments of the invention, i.e., when within a LAN, the alert may remain displayed by the communications device.

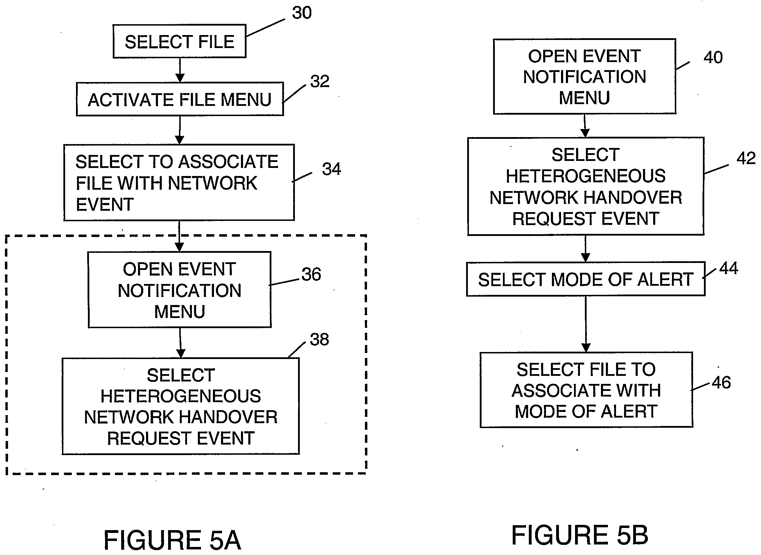

To associate a network event with a particular alert mode, the user may either select the file and associate it with a particular event (see Figure 5A) or go to a menu and associate an event with a particular file (see Figure 5B).

In Figure 5A, a user selects a file (step 30), activates a file menu for that file (step 32), and then selects to associate the file with a network event (step 34). If the user has just a default alert for all network handover events, the process of personalising their network handover event may terminate at that point. If the user has a more sophisticated system, for example, they could access optional menu options, such as might be the case if they wanted to distinguish between different short-wave networks, and/or whether they are entering or leaving a short-wave network etc, then other menu options may be presented or opened in a hierarchical format. The optional steps of opening an event notification menu (36) and selecting a specific heterogeneous network handover event (step 38) are shown within the dotted boundary shown in Figure 5A.

Figure 5B shows in another embodiment the invention (which may be provided in addition or instead of the system shown in Figure 3A), how a user may first open an event notification menu (step 40), select an event (42), select mode of alert (44), and then select file to associate with mode of alert (46).

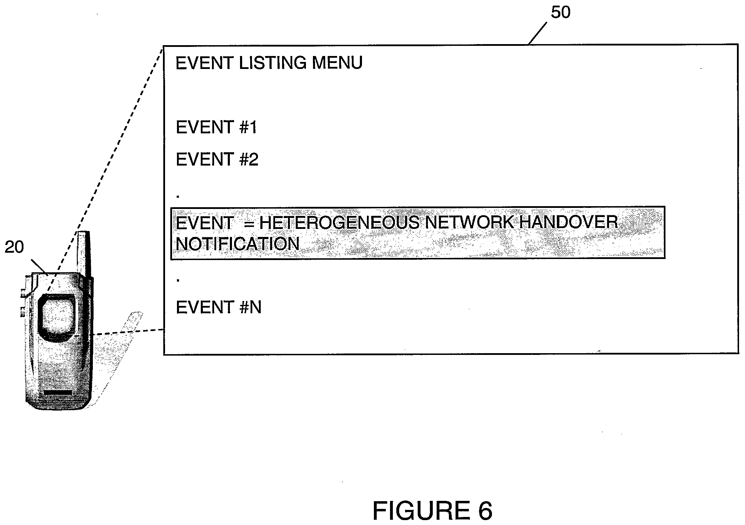

Figure 6 shows an embodiment of the invention in which a user is able to cause an event listing menu 50 screen to be displayed on mobile device 20. The user highlights and event and then employs the mobile device to associate a particular alert with a heterogeneous handover request event. As shown in Figure 4, the event heterogeneous handover network event has been selected, and this selection activates a second screen which enables a user to select one or more different media files to be associated with the event of the device sending a request to perform a heterogeneous handover.

In one embodiment, according to the invention, a user associates the network handover request event and/or personalise network identification alerts with any appropriate media files which are capable of being provided on the device, including image and movie files, sound-clips, and different vibrational alerts. These media files may be generic or specifically provided for the device network identification and heterogeneous handover alert purpose, and may be generated by the user storing files they have created themselves (e.g., a voice recording), or which have been downloaded from a server either on a pay-per-go or via a subscription service etc. Different types of files which may be associated with an alert mode include audio files, image files, video files, and files which when executed cause a physical change (e.g. a mode of vibration) in the mobile device, for example, an alert may be provided by executing files of the type a .jpg, .mp3, .wav, .wmp. A similar type of file structure may be provided to reconfigure a control system to send control messages to networked devices which the user may which to be activated when they handover to their home network or when they leave their home network (as mentioned above, for example, a lighting system, heating or security system, etc).

As mentioned above, in some embodiments, an alert is generated when network handover is successfully completed. In such embodiments, this may be the only type of event associated with an alert or alternatively, completion of handover may cause a second alert to be generated to indicate the identity of the new network the user is in once the handover process has completed.

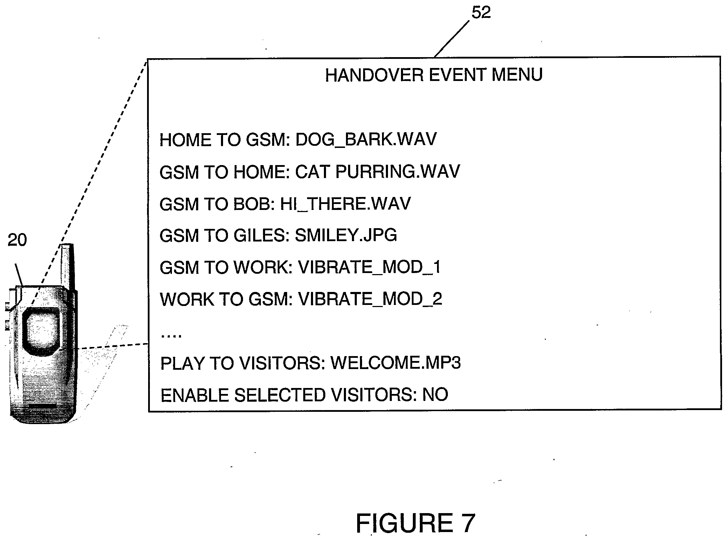

In embodiments where a subscriber provides one or more "visitors" to the subscriber's LAN with individual and/or generic announcements if the visitors request handover to the subscriber's LAN, a menu is provided in one exemplary embodiment such as is shown in Figure 7.

In Figure 7, handover event screen 52 enables a user to select which one of a plurality of heterogeneous handovers they want to associated with a particular alert. In this embodiment, a user has associated different .wav audio files to be played when they enter and leave home, and when they enter Bob's home network. When they visit Giles' home network, a JPEG image file is displayed on their device. When they use their phone at work, the alert to the work network coverage is provided by a more discrete vibrate alert.

Also shown in Figure 7 is a menu option for a default alert to be provided to all visiting devices to the user's home LAN (here "Welcome.mp3"), which results in a single default "Welcome" message being sent to all visitors who all are able to see the user's home network. Also shown in Figure 7 is the user's menu operation for sharing their LAN. here the user has not enabled any visitors to use their home network.
In one embodiment of the invention an alert is provided both when the mobile device is not being actively used by a user to make a communications call, and when a call is actively taking place. In this latter scenario, the alert has a form which enables it to be conveyed to the user only, for example, any audio sound may be represented as a tone etc or any other form which is played in such a way that it is not transmitted along with other data when the mobile device is being used to place an active call to the far end. This means that only the user of the mobile device will hear any audible alert as to which network they are in, and not the user of any device at the far end. Such an option may be configurable by the user, and is useful, for example, if the user does not want other persons to be able to associate the user with a particular location when communicating with each other. A user may wish to configure separate on-hook and off-hook alerts both for visitors and themselves.

In one embodiment of the invention, the audible alert comprises any suitable audible media such as can be played on the user's mobile device, which may vary from a simple tone, or ring-tune to a polyphonic tune.

In an alternative embodiment of the invention, the user is able to upload to the mobile device a configuration for the heterogeneous handover event notification and/or any subsequent indications of which network the mobile device is in from a device with greater storage and/or processing capabilities, such as a home computer.

Those skilled in the art will appreciate that to enable visitors to use a subscriber's home network - e.g. if someone is visiting their "Granny" etc, requires the subscriber to be capable of providing an appropriate indication to the router handing handover requests for that LAN that one or more services available in the home network to users already associated with that network should also be available to visiting devices. In one embodiment of the invention, such enablement occurs by default - any device capable of using a wireless broadband connection is capable of using any subscribers wireless broadband local area network, so that when a handover request is generated it follows by default that handover will follow unless the network overrides this. However, in other embodiments as mentioned above, successful handover is not assured - i.e., the device may request to handover, but in fact remains communicating using the wide area network mode of communication. Thus in some embodiments of the invention, the alert does not mean that the device is now able to use the local area network, such that the local area network exists and the device is now located within it.

Such embodiments may provide a selective service, and if so, the router associated with the LAN is capable of associating a visitor's user and/or device identity with permissions to use that LAN (and/or if the visiting device is authorised to use one or more services available over said local wireless network). This configuration is performed in any appropriate manner apparent to those skilled in the art. For example, the router may be configured to identify a user's identity directly by association with their mobile calling line identity equivalent, for example, with a SIM, or with another identifier uniquely associated with a user and/or the user's device. This enables a subscriber to associate one or more services which are available to the visiting devices when configuring an alert for that visitor when the visitor hands over to the subscriber's network. Consider if a SIM is used as a user identity. In this case, when the router recognises the visiting SIM, the event could cause the router to push out a "Welcome" type of announcement to the user, and if the SIM was in a particular category, the user of that "visiting" SIM could then use the LAN and not the WAN (i.e., which from the GSM network communications mode to use the short-range LAN communications mode).

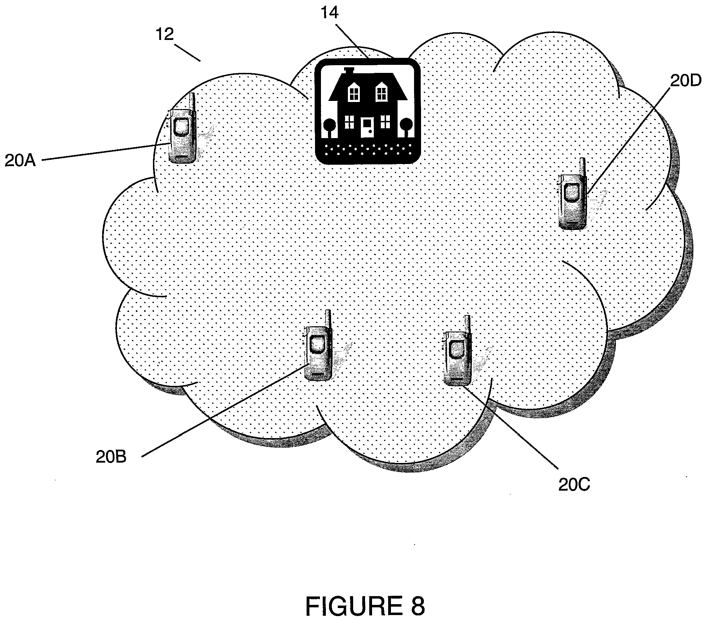

Figure 8 shows schematically visitor devices 20b, c, d within a home LAN associated with device 20a according to one embodiment of the invention. In this embodiment, the subscriber for the home LAN (the user of device 20a) configures an alert (for example, a welcome message) to be provided to other users when their devices request a handover to the user's home network. This request may or may not result in actual handover, depending on whether the home LAN is configured to have restricted access or open access. If open access is not provided, successful handover requires the visiting device to be authenticated, for example, by performing a lookup procedure to determine if the subscriber has configured their LAN to grant access to the communications device (which may be based simply on the SIM or other identity information associated with the device). If not successful, a welcome note may still be provided if the issue of an alert is triggered by the generation of a request for handover. Appropriate forms of alert in this example include the generation of a text message or transmission of a self-executing audio, image or video file. In one embodiment, these alerts are transmitted directly by the router of the home network to the visiting device over the LAN and/or the WAN as is appropriate. It is also possible to trigger an action when an unauthorised handover request is generated, such as the activation of a security system, the playing of a doorbell/chime or activation of light(s).

The subscriber configures the types of alerts to be sent to inform visiting mobile devices 20b 20c and 20d of the actions to be performed using an appropriate computer application which is able to configure the router to perform the necessary alert generation/ generate control messages to perform the necessary action.

In one embodiment, this application is able to operate on a subscriber's mobile communications device 20 to provide the subscriber with means for entering or selecting the communications network identities of the users of devices 20a,b,and c (e.g., their telephone numbers or icons or other displayed identities) and to enable the subscriber to associate with each identity one or more alert modes and/or files which are to be either provided to the visiting user's mobile devices via the communications system, or which are to be activated on the visiting user's mobile device if previously provided or installed.

In one embodiment of the invention, the configuration application is provided on a platform which is capable of communicating the subscriber's selection (i.e., the alert/action configuration information) to the wireless router of the subscriber's home network which in some embodiments may further communicate the configuration information with a remote server which receives notification from visiting mobile devices of any request to handover from another network to the home network, and which performs a look-up operation to determine if the identity of the user associated with the device which has generated the request to hand-over message has been associated with a specific alert. In one embodiment, the remote server polls the router of the home network to determine new configuration information, in an alternative embodiment; the router pushes this information to the remote server. Where information is communicated with a remote server, any necessary data relating to the alert/action is provided to the visiting device to enable that device to generate relevant alerts in accordance with the subscriber's configuration.

Those skilled in the art will appreciate that many alert configurations are possible on a selected default, individual or group basis. In one embodiment, alerts are selected according to a group of other user/device identities. For example, in one embodiment, a subscriber configures their home network to play a particular announcement to a group of visiting devices associated with a "friends" group identity and configures a different announcement to be provided to a group of visiting devices which the subscriber has associated with a "family" group identity. The subscriber also configures a default announcement for unrecognised devices and configures specific alerts for their own mobile communications device when requesting handover to/from the subscriber's home LAN. Where a handover request is received and the device generating the request for haridover is successfully authenticated for handover to the home network, the alert may include a notification that the handover has been successful -for example, "You have handed over to Bob's home network".

In one embodiment, a subscriber may configure an alert to override any other user preferences for personalised alerts that a person has configured on their mobile device. In another embodiment, the user may override the subscriber's alert configuration.

As mentioned above, the alert configuration application may be provided on the mobile device of the subscriber and/or on a different platform such as a personal computer. The application configures for at least one mobile communications device a form of alert and/or action to be performed when a handover request is generated and/or when a handover is successful. Where alerts require verification of access permissions to the user's home network, and requires some level of authentication of a user and/or device identity, which is to be associated with a permission/alert/action by the subscriber, the identity information may be derived from contact information available to the subscriber for example, address/email/telephone information stored on the subscriber's mobile device or personal computer (such as might, for example, be provided in Outlook™ etc.).

In this way, a user is able to associate a particular user identity with a form of alert mode, and a particular media form for the alert, in the manner mentioned herein above so that personalised alerts can be provided to individual and groups of visitors of another user's home network.

In one embodiment, an action is performed which may replace an issuance of an alert or be associated with an alert, such as an action controlling the operation of apparatus mentioned hereinabove. One or more actions are configured by a subscriber to be triggered when a handover request is received from the subscriber's device (and in an alternative embodiment, one or more actions may also be triggered when another user's device generates a request for handover). Each action is associated with the request for handover by the user using an appropriate menu on either the user's mobile communications device or the user's home computer. In one embodiment, a user configures a request for handover and/or handover alert to be associated with a menu of one or more apparatus and specifies one or more actions to be taken by said apparatus. The alert may be generated in addition to the actions or the actions may be performed instead of any alert transmission.

For example, instead of the handover event causing an alert to be played just on a user's mobile device, the handover event triggers an alert which comprises apparatus activation within the premises within which the router generating the LAN is located. The apparatus may be a "doorbell" , and the action may be for the doorbell to ring. As another example, in one embodiment, an action comprises generation of an audible alarm signal from alarm apparatus associated with premises located within the home LAN. In another exemplary embodiment, a log is generated recording the identity of the visiting device (and/or user identity) which is appropriately stored (e.g., for timekeeping/security). Other examples include activation of utilities such as lights/heating, for example, switching a light on/off. Each action is triggered by the router of the home LAN detecting a handover event has been requested occurred for a particular user identity, which may or may not be the subscriber identity. For example, some actions may be triggered for other users of devices authorised to operate within the subscriber's home network.

Those skilled in the art will recognise that several equivalents to the features described in each embodiment exist, and that it is possible to incorporate features of one embodiment into other embodiments (for example, the features described in the context of a user may also apply when that user is the subscriber of a home network etc). Accordingly, the scope of the invention is not to be confined to the specific elements recited in the description but instead is to be determined by the scope of the claims, when construed in the context of the description, bearing in mind the common general knowledge of those skilled in the art.

Those skilled in the art will moreover appreciate that the above embodiments of the invention are greatly simplified, and that it is possible to combine one or more features of one embodiment with features of the other embodiments. Where known equivalents exist to the functional elements of the embodiments, these are considered to be implicitly disclosed herein, unless specifically disclaimed.

The term home local area network refers to the relatively short range wireless local area network associated with a particular subscriber, which in some embodiments is provided by a wireless router located in a subscriber's home, but in other embodiments is provided by a wireless router located in another location (for example, business premises etc).

The text of the abstract below is hereby incorporated into the specification:
A communications system comprises a plurality of local area networks (LAN) within a wide area network (WAN), in which local area networks are associated with a subscriber. A LAN has a different mode of communication from the mode of communication within the WAN. A subscriber has a user identity which is directly or indirectly associated with both a LAN (their home network) and with the WAN, for example, a GSM cellular communications network.

When a mobile communications device requests handover or completes handover to the wireless home LAN of a subscriber or from the subscriber's wireless LAN to the WAN, the handover event triggers an action to be performed. The action may be the generation of an alert and/or the activation of one or more devices/systems in accordance with a configuration scheme set up by the subscriber. The,communications device may be the subscriber's mobile communication device or the communications device of another user which is capable of operating in both a wireless LAN mode and in a WAN mode.

## Claims

1. A heterogeneous handover method for a communications system (1) comprising a plurality of wireless local area networks (12) and a wireless wide area network (10) and a mobile communications device (20) having an identity which is directly or indirectly associated with a local area network and with the wide area network, said method comprising:
the mobile communications device performing a heterogeneous handover operation between differing networks (12A, 12E) of said communications system,
the heterogeneous handover operation automatically generating control information for one or more apparatus; and transmitting control information to said one or more apparatus to control at least one operation of a said apparatus for generating an alert to said mobile communications device, **characterised in that** said alert is configured by a user having an identity associated with a local area network (12E) to or from which handover is being requested, by associating an action triggered by said handover operation to be dependent on an identity associated with the mobile communications device requesting handover and/or an identity of the user of the mobile communications device.

2. A handover method as claimed in claim 1, wherein the heterogeneous handover operation which triggers said alert generation comprises one of the following:
the generation of a request to handover to the local area network associated with said user from the wide area network; the generation of a request to handover from the local area network associated with said user to said wide area network; the completion of the handover to said local area network associated with said user from the wide area network; or the completion of the handover from said local area network associated with said user to the wide area network.

3. A handover method as claimed in claim 1, wherein the actions performed are dependent on the identity of the local area network to or from which the handover operation is being performed and are configured by the user of the mobile communications device.

4. A handover method as claimed in claim 1, wherein one or more apparatus are located in said local area network from or to which handover is being requested, and wherein said control information is transmitted to said one or more apparatus over said local area network.

5. A handover method as claimed in any preceding claim, wherein the operation of a said apparatus in accordance with said control information is configured by said user using the mobile communications device requesting handover to or from the local area network.

6. A handover method as claimed in any preceding claim, wherein the handover operation further triggers a prompt to a user of said mobile communications device to configure at least one operation of said one or more apparatus, which is controlled in dependence on the user's response and in accordance with said control information.

7. A handover method as claimed in any previous claim, wherein the user of the mobile communications device has the same identity as the identity of the user associated with the local area network to or from which handover is being requested.

8. A handover method as claimed in any previous claim, further comprising the step of:
communicating a signal to said mobile communications device requesting handover, the signal communicating user configuration data enabling said mobile communications device to implement said at least one action according to the configuration of said user associated with the local area network to or from which handover is being requested, wherein when said signal is received by said mobile communications device, the scheme further comprises processing data conveyed by said signal to enable said mobile communications device to implement said at least one action.

9. A handover method as claimed in any previous claim, wherein said scheme is arranged to be implemented by a mobile communications device whilst either on-hook or off-hook.

10. Controller for remotely activating apparatus located within a wireless local area network (12E) of a communications system, the communications system comprising a plurality of wireless local area networks (12) and a wide area network (10), the controller further comprising:
means for storing a set of one or more apparatus actions to be performed in the event a heterogeneous handover is detected;
means for detecting a handover event of a mobile communications device (20) having two modes of communication, one mode being associated with a local area network (12E) of said communications system, the other mode being associated with the wide area network (10) of said communications system;
control means for automatically generating control information for one or more apparatus actions to be performed in response to a handover event; and
transmission means for transmitting said control information to said apparatus to control at least one operation of a said apparatus for generating an alert to said mobile communications device,
**characterised in that** said control means is configurable by commands received at an input from a user associated with a local area network in said communications system from which or to which handover is being requested by associating the alert to be triggered by said handover operation to be dependent on an identity associated with the mobile communications device requesting handover and/or an identity of the user of the mobile communications device.

11. A controller as claimed in claim 10, arranged to perform the heterogeneous handover operation which triggers said alert generation, said heterogeneous handover operation comprising one of the following:
the generation of a request to handover to the local area network associated with said user from the wide area network; the generation of a request to handover from the local area network associated with said user to said wide area network; the completion of the handover to said local area network associated with said user from the wide area network; or the completion of the handover from said local area network associated with said user to the wide area network.

12. A controller as claimed in claim 10, wherein the actions performed are dependent on the identity of the local area network to or from which the handover operation is being performed and are configured by the user of the mobile communications device.

13. A controller as claimed in claim 10, wherein the transmission means is arranged to transmit said control information over said local area network to one or more apparatus from or to which handover is being requested.

14. A controller as claimed in any of claims 10 to 13, further comprising a prompting means responsive to the handover means to trigger transmission of a prompt to a user of said mobile communications device to configure at least one operation of said one or more apparatus, the configuration means being controllable in dependence on the user's response and in accordance with said control information.

15. A controller as claimed in any of claims 10 to 14, further comprising means for:
communicating a signal to said mobile communications device requesting handover, the signal communicating user configuration data enabling said mobile communications device to implement said at least one action according to the configuration of said user associated with the local area network to or from which handover is being requested.

16. A suite of one or more computer applications in use enabling components of a controller as claimed in any one of claims 10 to 15 to implement steps in the handover method claimed in any one of claims 1 to 9.

## Patentansprüche

1. Verfahren zum heterogenen Handover für ein Kommunikationssystem (1), das umfasst: eine Vielzahl von drahtlosen lokalen Netzen (12) und ein drahtloses Weitverkehrsnetz (10) sowie eine mobile Kommunikationsvorrichtung (20) mit einer Identität, die direkt oder indirekt mit einem lokalen Netz und mit dem Weitverkehrsnetz in Verbindung steht,
wobei das Verfahren umfasst:
die mobile Kommunikationsvorrichtung führt eine Operation des heterogenen Handovers zwischen verschiedenen Netzen (12A, 12E) des Kommunikationssystems aus,
die Operation des heterogenen Handovers erzeugt automatisch Steuerinformationen für ein Gerät oder mehrere Geräte und übermittelt die Steuerinformationen an das eine Gerät oder die mehreren Geräte, um mindestens eine Operation eines solchen Geräts zur Erzeugung eines Warnhinweises an die mobile Kommunikationsvorrichtung zu steuern,
**dadurch gekennzeichnet, dass** der Warnhinweis durch einen User, der eine Identität besitzt, die mit einem lokalen Netz (12E) in Verbindung steht, zu dem oder von dem ein Handover angefordert wird, konfiguriert wird durch Assoziierten, dass eine durch die Handover-Operation ausgelöste Aktion von einer Identität, die mit der mobilen Kommunikationsvorrichtung, die das Handover verlangt, in Verbindung steht, und/oder einer Identität des Users der mobilen Kommunikationsvorrichtung abhängig ist.

2. Handover-Verfahren wie in Anspruch 1 beansprucht, bei dem die Operation des heterogenen Handovers, welche die Erzeugung des Warnhinweises auslöst, eine der folgenden Operationen ist:
die Erzeugung einer Anforderung des Handovers von dem Weitverkehrsnetz zu dem lokalen Netz, das mit dem User in Verbindung steht; die Erzeugung einer Anforderung des Handovers von dem lokalen Netz, das mit dem User in Verbindung steht, zu dem Weitverkehrsnetz; der Abschluss des Handovers von dem Weitverkehrsnetz zu dem mit dem User in Verbindung stehenden lokalen Netz oder der Abschluss des Handovers von dem mit dem User in Verbindung stehenden lokalen Netz zu dem Weitverkehrsnetz.

3. Handover-Verfahren wie in Anspruch 1 beansprucht, bei dem die durchgeführten Aktionen von der Identität des lokalen Netzes, zu dem oder von dem die Operation des Handovers durchgeführt wird, abhängig sind und durch den User der mobilen Kommunikationsvorrichtung konfiguriert werden.

4. Handover-Verfahren wie in Anspruch 1 beansprucht, bei dem sich ein Gerät oder mehrere Geräte in dem lokalen Netz befinden, von dem oder zu dem Handover angefordert wird, und bei dem die Steuerinformationen über das lokale Netz an das eine Gerät oder die mehreren Geräte übermittelt werden.

5. Handover-Verfahren wie in einem vorhergehenden Anspruch beansprucht, bei dem die Operation eines Geräts gemäß den Steuerinformationen durch den User unter Verwendung der mobilen Kommunikationsvorrichtung konfiguriert wird, die Handover zu dem oder von dem lokalen Netz anfordert.

6. Handover-Verfahren wie in einem vorhergehenden Anspruch beansprucht, bei dem die Handover-Operation ferner eine Aufforderung an einen User der mobilen Kommunikationsvorrichtung auslöst, mindestens eine Operation des einen Gerätes oder der mehreren Geräte zu konfigurieren, die in Abhängigkeit von der Antwort des Users und gemäß den Steuerinformationen gesteuert wird.

7. Handover-Verfahren wie in einem vorhergehenden Anspruch beansprucht, bei dem der User der mobilen Kommunikationsvorrichtung eine Identität besitzt, die gleich der Identität des Users ist, der mit dem lokalen Netz in Verbindung steht, zu dem oder von dem Handover angefordert wird.

8. Handover-Verfahren wie in einem vorhergehenden Anspruch beansprucht, das ferner den folgenden Schritt umfasst:
Übermitteln eines Signals an die mobile Kommunikationsvorrichtung, die Handover anfordert, wobei das Signal User-Konfigurationsdaten übermittelt, welche die mobile , Kommunikationsvorrichtung in die Lage versetzen, die mindestens eine Aktion gemäß der Konfiguration des Users zu implementieren, der mit dem lokalen Netz in Verbindung steht, zu dem oder von dem Handover angefordert wird, wobei, wenn das Signal durch die mobile Kommunikationsvorrichtung empfangen wird, das Schema ferner die Verarbeitung von durch das Signal transportierten Daten beinhaltet, um die mobile Kommunikationsvorrichtung in die Lage zu versetzen, die mindestens eine Aktion zu implementieren.

9. Handover-Verfahren wie in einem vorhergehenden Anspruch beansprucht, bei dem das Schema so ausgebildet ist, dass es durch eine mobile Kommunikationsvorrichtung implementiert werden kann, während sie frei oder besetzt ist.

10. Steuereinrichtung zur Fern-Aktivierung von Geräten, die sich innerhalb eines drahtlosen lokalen Netzes (12E) eines Kommunikationssystems befinden, wobei das Kommunikationssystem eine Vielzahl von drahtlosen lokalen Netzen (12) und ein Weitverkehrsnetz (10) umfasst, wobei die Steuereinrichtung ferner umfasst:
eine Einrichtung zum Speichern eines Satzes einer Geräte-Aktion oder mehrerer Geräte-Aktionen, die bei Erfassung eines heterogenen Handovers durchzuführen sind,
eine Einrichtung zur Erfassung eines Handover-Vorgangs einer mobilen Kommunikationsvorrichtung (20), die zwei Arten der Kommunikation aufweist, wobei eine Art mit einem lokalen Netz (12E) des Kommunikationssystems in Verbindung steht und die andere Art mit dem Weitverkehrsnetz (10) des Kommunikationssystems in Verbindung steht,
eine Steuereinrichtung zur automatischen Erzeugung von Steuerinformationen für eine Geräte-Aktion oder mehrere Geräte-Aktionen, die als Antwort auf einen Handover-Vorgang durchzuführen sind,
und
eine Übermittlungseinrichtung zur Übermittlung der Steuerinformationen an das Gerät, um mindestens eine Operation des Geräts zur Erzeugung eines Warnhinweises an die mobile Kommunikationsvorrichtung zu steuern,
**dadurch gekennzeichnet, dass** die Steuereinrichtung durch Befehle, die an einem Eingang von einem User empfangen werden, der mit einem lokalen Netz in dem Kommunikationssystem in Verbindung steht, von dem oder zu dem Handover angefordert wird, konfigurierbar ist durch Assoziierten, dass der durch die Operation des Handovers auszulösende Warnhinweis von einer Identität, die mit der mobilen Kommunikationsvorrichtung, die das Handover verlangt, in Verbindung steht, und/oder einer Identität des Users der mobilen Kommunikationsvorrichtung abhängig ist.

11. Steuereinrichtung wie in Anspruch 10 beansprucht, die zur Durchführung der Operation des heterogenen Handovers ausgebildet ist, welche die Erzeugung des Warnhinweises auslöst, wobei die Operation des heterogenen Handovers eine der folgenden Operationen ist:
die Erzeugung einer Anforderung des Handovers von dem Weitverkehrsnetz zu dem lokalen Netz, das mit dem User in Verbindung steht; die Erzeugung einer Anforderung des Handovers von dem lokalen Netz, das mit dem User in Verbindung steht, zu dem Weitverkehrsnetz; der Abschluss des Handovers von dem Weitverkehrsnetz zu dem mit dem User in Verbindung stehenden lokalen Netz oder der Abschluss des Handovers von dem mit dem User in Verbindung stehenden lokalen Netz zu dem Weitverkehrsnetz.

12. Steuereinrichtung wie in Anspruch 10 beansprucht, bei der die durchgeführten Aktionen von der Identität des lokalen Netzes, zu dem oder von dem die Operation des Handovers durchgeführt wird, abhängig sind und durch den User der mobilen Kommunikationsvorrichtung konfiguriert werden.

13. Steuereinrichtung wie in Anspruch 10 beansprucht, bei der die Übermittlungseinrichtung so ausgebildet ist, dass sie die Steuerinformationen über das lokale Netz an ein Gerät oder mehrere Geräte übermittelt, von denen oder zu denen Handover angefordert wird.

14. Steuereinrichtung wie in einem der Ansprüche 10 bis 13 beansprucht, die ferner eine Aufforderungseinrichtung aufweist, die unter Ansprechen auf die Handover-Einrichtung die Übermittlung einer Aufforderung an einen User der mobilen Kommunikationsvorrichtung auslöst, mindestens eine Operation des einen Gerätes oder der mehreren Geräte zu konfigurieren, wobei die Konfigurationseinrichtung in Abhängigkeit von der Antwort des Users und gemäß den Steuerinformationen steuerbar ist.

15. Steuereinrichtung wie in einem der Ansprüche 10 bis 14 beansprucht, die ferner eine Einrichtung aufweist zur Übermittlung eines Signals an die mobile Kommunikationsvorrichtung, die Handover anfordert, wobei das Signal User-Konfigurationsdaten übermittelt, welche die mobile Kommunikationsvorrichtung in die Lage versetzen, die mindestens eine Aktion gemäß der Konfiguration des Users zu implementieren, der mit dem lokalen Netz in Verbindung steht, zu dem oder von dem Handover angefordert wird,

16. Abfolge einer Computer-Anwendung oder mehrerer Computer-Anwendungen, die im Einsatz Komponenten einer Steuereinrichtung, wie sie in einem der Ansprüche 10 bis 15 beansprucht ist, ermöglichen, die Schritte in dem Handover-Verfahren, das in einem der Ansprüche 1 bis 9 beansprucht ist, zu implementieren.

## Revendications

1. Procédé de transfert intercellulaire hétérogène pour un système (1) de communications comprenant une pluralité de réseaux locaux sans fil (12) et un réseau étendu sans fil (10) et un dispositif (20) de communications mobile ayant une identité qui est directement ou indirectement associée avec un réseau local et avec le réseau étendu, ledit procédé comprenant :
le dispositif de communications mobile exécutant une opération de transfert intercellulaire hétérogène entre des réseaux (12A, 12E) différents dudit système de communications,
l'opération de transfert intercellulaire hétérogène générant automatiquement une information de commande pour un ou plusieurs appareil(s) ; et la transmission de l'information de commande audit/auxdits un ou plusieurs appareil(s) pour commander au moins une opération d'un dit appareil pour générer une alerte pour ledit dispositif de communications mobile, **caractérisé en ce que** ladite alerte est configurée par un utilisateur ayant une identité associée avec un réseau local (12E) sur lequel ou duquel un transfert intercellulaire est demandé, en associant une action déclenchée par ladite opération de transfert intercellulaire pour dépendre d'une identité associée avec le dispositif de communications mobile demandant le transfert intercellulaire et/ou une identité de l'utilisateur du dispositif de communications mobile.

2. Procédé de transfert intercellulaire selon la revendication 1, dans lequel l'opération de transfert intercellulaire hétérogène qui déclenche ladite génération d'alerte comprend une des suivantes :
la génération d'une demande de transfert intercellulaire sur le réseau local associé avec ledit utilisateur depuis le réseau étendu ; la génération d'une demande de transfert intercellulaire depuis le réseau local associé avec ledit utilisateur sur le réseau étendu ; la fin du transfert intercellulaire sur ledit réseau local associé avec ledit utilisateur depuis le réseau étendu ; ou la fin du transfert intercellulaire depuis ledit réseau local associé avec ledit utilisateur sur le réseau étendu.

3. Procédé de transfert intercellulaire selon la revendication 1, dans lequel les actions mises en oeuvre dépendent de l'identité du réseau local sur lequel ou duquel l'opération de transfert intercellulaire est exécutée et sont configurées par l'utilisateur du dispositif de communications mobile.

4. Procédé de transfert intercellulaire selon la revendication 1, dans lequel un ou plusieurs appareil(s) est/ sont localisé(s) dans ledit réseau local duquel ou sur lequel le transfert intercellulaire est demandé, et dans lequel ladite information de commande est transmise audit/auxdits un ou plusieurs appareil(s) sur ledit réseau local.

5. Procédé de transfert intercellulaire selon une quelconque revendication précédente, dans lequel l'opération d'un dit appareil en fonction de ladite information de commande est configurée par ledit utilisateur utilisant le dispositif de communications mobile demandant le transfert intercellulaire sur le ou du réseau local.

6. Procédé de transfert intercellulaire selon une quelconque revendication précédente, dans lequel l'opération de transfert intercellulaire déclenche en outre une invite pour un utilisateur dudit dispositif de communications mobile pour configurer au moins une opération dudit/desdits un ou plusieurs appareil(s), qui est commandée en fonction de la réponse de l'utilisateur et en fonction de ladite information de commande.

7. Procédé de transfert intercellulaire selon une quelconque revendication précédente, dans lequel l'utilisateur du dispositif de communications mobile a la même identité que l'identité de l'utilisateur associé avec le réseau local sur lequel ou duquel le transfert intercellulaire est demandé.

8. Procédé de transfert intercellulaire selon une quelconque revendication précédente, comprenant en outre l'étape de :
communication d'un signal audit dispositif de communications mobile demandant un transfert intercellulaire, le signal communiquant des données de configuration d'utilisateur permettant audit dispositif de communications mobile de mettre en oeuvre ladite au moins une action en fonction de la configuration dudit utilisateur associé avec le réseau local sur lequel ou duquel le transfert intercellulaire est demandé, dans lequel, lorsque ledit signal est reçu par ledit dispositif de communications mobile, le programme comprend en outre le traitement de données transportées par ledit signal pour permettre audit dispositif de communications mobile de mettre en oeuvre ladite au moins une action.

9. Procédé de transfert intercellulaire selon une quelconque revendication précédente, dans lequel ledit programme est agencé pour être mis en oeuvre par un dispositif de communications mobile, qu'il soit décroché ou raccroché.

10. Contrôleur pour activer à distance un appareil localisé au sein d'un réseau local sans fil (12E) d'un système de communications, le système de communications comprenant une pluralité de réseaux locaux sans fil (12) et un réseau étendu (10), le contrôleur comprenant en outre :
un moyen pour stocker un ensemble d'une ou plusieurs action(s) d'appareil devant être exécutée(s) dans le cas où un transfert intercellulaire hétérogène est détecté ;
un moyen pour détecter un événement de transfert intercellulaire d'un dispositif (20) de communications mobile ayant deux modes de communication, un mode étant associé avec un réseau local (12E) dudit système de communications, l'autre mode étant associé avec le réseau étendu (10) dudit système de communications ;
un moyen de commande pour générer automatiquement une information de commande pour une ou plusieurs action(s) d'appareil devant être exécutée(s) en réponse à un événement de transfert intercellulaire ; et
un moyen de transmission pour transmettre ladite information de commande audit appareil pour commander au moins une opération d'un dit appareil pour générer une alerte pour ledit dispositif de communications mobile,
**caractérisé en ce que** ledit moyen de commande est configurable par des commandes reçues à une entrée d'un utilisateur associé avec un réseau local dans ledit système de communications duquel ou sur lequel le transfert intercellulaire est demandé par association de l'alerte devant être déclenchée par ladite opération de transfert intercellulaire pour dépendre d'une identité associée avec le dispositif de communications mobile demandant le transfert intercellulaire et/ou une identité de l'utilisateur du dispositif de communications mobile.

11. Contrôleur selon la revendication 10, agencé pour mettre en oeuvre l'opération de transfert intercellulaire hétérogène qui déclenche ladite génération d'alerte, ladite opération de transfert intercellulaire hétérogène comprenant une des suivantes :
la génération d'une demande de transfert intercellulaire sur le réseau local associé avec ledit utilisateur depuis le réseau étendu ; la génération d'une demande de transfert intercellulaire depuis le réseau local associé avec ledit utilisateur sur le réseau étendu ; la fin du transfert intercellulaire sur ledit réseau local associé avec ledit utilisateur depuis le réseau étendu ; ou la fin du transfert ) intercellulaire depuis ledit réseau local associé avec ledit utilisateur sur le réseau étendu.

12. Contrôleur selon la revendication 10, dans lequel les actions exécutées dépendent de l'identité du réseau local sur lequel ou ) duquel l'opération de transfert intercellulaire est exécutée et sont configurées par l'utilisateur du dispositif de communications mobile.

13. Contrôleur selon la revendication 10, dans lequel le moyen de transmission est agencé pour transmettre ladite information de commande sur ledit réseau local à un ou plusieurs appareil(s) duquel/desquels ou sur lequel/lesquels le transfert intercellulaire est demandé.

14. Contrôleur selon l'une quelconque des revendications 10 à 13, comprenant en outre un moyen d'invite répondant au moyen de transfert intercellulaire pour déclencher la transmission d'une invite pour un utilisateur dudit dispositif de communications mobile pour configurer au moins une opération dudit/desdits un ou plusieurs appareil(s), le moyen de configuration étant commandable en fonction de la réponse de l'utilisateur et en fonction de ladite information de commande.

15. Contrôleur selon l'une quelconque des revendications 10 à 14, comprenant en outre un moyen pour :
communiquer un signal audit dispositif de communications mobile demandant un transfert intercellulaire, le signal communiquant des données de configuration d'utilisateur permettant audit dispositif de communications mobile de mettre en oeuvre ladite au moins une action en fonction de la configuration dudit utilisateur associé avec le réseau local sur lequel ou duquel le transfert intercellulaire est demandé.

16. Suite d'une ou plusieurs application(s) informatique(s) permettant à l'utilisation que des composants d'un contrôleur selon l'une quelconque des revendications 10 à 15 mettent en oeuvre des étapes du procédé de transfert intercellulaire selon l'une quelconque des revendications 1 à 9.
